# EUROPÄISCHE PATENTSCHRIFT

(11) **EP 2 484 002 B1**
(45) Veröffentlichungstag und Bekanntmachung des Hinweises auf die Patenterteilung: **30.07.2014**
(21) Anmeldenummer: 10763355.4
(22) Anmeldetag: 29.09.2010
(51) Int. Cl.: H02P 6/18

(54) **VERFAHREN UND EINRICHTUNG ZUR ÜBERWACHUNG UND KORREKTUR EINER SENSORLOSEN ROTORLAGEERKENNUNG BEI PERMANENTERREGTEN MOTOREN**
METHOD AND DEVICE FOR MONITORING AND CORRECTING A SENSORLESS ROTOR POSITION DETECTION IN PERMANENTLY EXCITED MOTORS
PROCÉDÉ ET DISPOSITIF DE SURVEILLANCE ET DE CORRECTION D'UNE DÉTECTION DE POSITION DE ROTOR SANS CAPTEUR SUR DES MOTEURS À EXCITATION PERMANENTE

(30) Priorität: 01.10.2009 DE 102009045247
(43) Veröffentlichungstag der Anmeldung: 08.08.2012
(73) Patentinhaber: Gärtner-Electronic-Design GmbH, 15236 Frankfurt (Oder) (DE)
(72) Erfinder: SCHEIT, Alexander, 15232 Frankfurt (Oder) (DE); SEELIG, Horst-Günter, 15234 Frankfurt (Oder) (DE)
(74) Vertreter: Kailuweit & Uhlemann Patentanwälte
(86) Internationale Anmeldenummer: PCT/EP2010/064485
(87) Internationale Veröffentlichungsnummer: WO 2011/039273

(56) Entgegenhaltungen:
- EP-A2- 1 401 093
- JP-A- 2004 254 423
- US-A1- 2002 060 548
- US-A1- 2007 031 131

## Beschreibung

Die Erfindung betrifft Einrichtungen zur sensorlosen Überwachung und Korrektur der Rotorlage eines bürstenlosen Gleichstrommotors (BLDC), wobei eine Erkennungseinrichtung der Rotorlage des betriebenen Motors zur Übertragung der detektierten induktivitätsbasierten Signale über eine Übervvachungs-/Korrektureinrichtung zur Überwachung der Zweideutigkeit der Rotorlageerkennung und bei Erfordernis zur Korrektur der Rotorlage, eine Steuereinrichtung und ein Stromrichter mit dem Motor und die Erkennungseinrichtung zur Übertragung der Rotorlage mit der Steuereinrichtung zusammengeschaltet sind.

Permanent erregte Synchronmaschinen (PMSM) und bürstenlose Gleichstrommotoren (BLDC) bestehen aus einem Stator und einem Rotor mit Magneten. Die einzelnen Phasen des Stators sind im Stern oder Dreieck verschaltet. Der Motor wird mit einem Stromrichter betrieben. Diese Motoren benötigen eine Ansteuerelektronik, die die Rotorlage ermittelt und die einzelnen Phasen bestromt.

Die Rotorlage kann mithilfe von Sensoren detektiert werden. So werden unter anderem Hallsensoren verwendet. Sensoren benötigen Bauraum und bedingen höhere Systemkosten.

Um diese Nachteile zu vermeiden, werden sensorlose Ansteuerverfahren verwendet. Diese können in zwei Gruppen grob klassifiziert werden.

Eine Gruppe verwendet die durch Bewegung in den Phasen induzierte Spannung. Der systembedingte Nachteil liegt in der fehlenden Lageinformation bei Stillstand.

Die zweite Gruppe basiert auf der Variation der Ständerinduktivitäten. Die Sättigung der Ständerinduktivität wird durch das Rotorfeld der Permanentmagnete und das stromverursachte Statorfeld beeinflusst.

Die Induktivität einer Spule ist im stromlosen Zustand proportional zur relativen Permeabilität. Aufgrund der im Eisen auftretenden Sättigungseffekte sinkt mit steigender Feldstärke die relative Permeabilität oder anders ausgedrückt, es erhöht sich der magnetische Widerstand. Dabei ist nur der Betrag und nicht die Richtung entscheidend. Daraus folgt eine rotorlageabhängige Funktion der Induktivität für einen BLDC-Motor. Besitzt der Motor drei Phasen, so sind die Funktionen 60 elektrische Grad zueinander verschoben. Im unbestromten Zustand besitzen die Nord- und die Südpole der Rotormagneten die gleiche Wirkung. Deshalb besitzen diese Funktionen der Induktivitäten die doppelte Periodizität zur elektrischen Periode. Diese Zweideutigkeit muss für eine vollständige Lageinformation aufgelöst werden. Es wird dem Statorfeld ein stromerregtes Feld überlagert. So wird die Sättigung im Motor entweder verstärkt oder verringert und so die entsprechende Induktivität verkleinert oder vergrößert. Dieser Effekt beeinflusst ebenso die Winkelbestimmung bei Nutzbestromung des Motors und führt zu einer fehlerhaft bestimmten Rotorlage.

Durch die Druckschrift US 2002/060548 A1 ist eine Einrichtung zur sensorlosen Überwachung und Korrektur der Rotorlage während des Betriebs eines Motors bekannt. Diese weist eine Steuereinrichtung und einen nachgeschalteten Stromrichter zur Steuerung des Motors auf. Weiterhin ist eine Erkennungseinrichtung der Rotorlage des betriebenen Motors mit der Steuereinrichtung und dem Stromrichter verbunden. Darüber hinaus ist eine Überwachungs-/Korrektureinrichtung mit der Erkennungseinrichtung zusammengeschaltet, wobei die Ströme im Motor durch Vergrößerung oder Verkleinerung der Motorspannung zur Überwachung der Zweideutigkeit der Rotorlageerkennung variiert und bei Erfordernis korrigiert werden. Zur Korrektur wird die Stromabhänggkeit der Statorinduktivitäten verwendet.

Die Druckschrift JP 2004 254423 A offenbart eine Einrichtung zur sensorlosen Überwachung und Korrektur der Rotorlage während des Betriebs eines Motors, wobei die Phasenlage der Bestromung verschoben wird.

Mit diesen Einrichtungen kann insbesondere die Anlaufzeit verkürzt werden, wozu ein nicht unerheblicher Rechenaufwand notwendig ist. Darüber hinaus wird ein Regelschleife zur Durchführung des Verfahrens eingesetzt, wobei eine eventuelle positive oder negative Abweichung der Rotorlage erfasst, mit einem Nullsignalgenerator verglichen und daraus ein Fehler berechnet wird.

Der im Patentanspruch 1 angegebenen Erfindung liegt die Aufgabe zugrunde, die Zweideutigkeit der aus den Induktivitätsverhältnissen des Motors bestimmten Rotorlage bei permanenterregten Motoren einfach sensorlos aufzulösen und einen fehlerhaft bestimmten Winkel bei Bedarf zu korrigieren.

Diese Aufgabe wird mit den im Patentanspruch 1 aufgeführten Merkmalen gelöst.

Die Einrichtung zeichnet sich insbesondere dadurch aus, dass die Zweideutigkeit der aus den Induktivitätsverhältnissen des Motors bestimmten Rotorlage bei permanenterregten Motoren einfach sensorlos auflösbar und einen fehlerhaft bestimmten Winkel bei Bedarf korrigierbar ist.

Dazu wird während des Betriebes des Motors die Rotorlage mittels einer induktivitätsbasierten Erkennungseinrichtung detektiert. Weiterhin wird über eine Überwachungs-/Korrektureinrichtung die Rotorlage bezüglich der Zweideutigkeit der induktivitätsbasierten Signale überwacht und bei Erfordernis ein aufgetretener Winkelfehler korrigiert, wobei die Ströme im Motor variiert werden.

In der Einrichtung sind dazu eine Erkennungseinrichtung der Rotorlage des betriebenen Motors über eine Überwachungs-/Korrektureinrichtung zur Überwachung der Rotorlage und bei Erfordernis zur Korrektur der Rotorlage, eine Steuereinrichtung und ein Stromrichter mit dem Motor so zusammengeschaltet, dass die Ströme im Motor variiert werden und damit die Stromabhängigkeit der Statorinduktivitäten zur Korrektur verwendet wird.

Bürstenlose Gleichstrommotoren (BLDC) bestehen aus einem Stator und einem Rotor mit Magneten. Die einzelnen Phasen des Stators sind im Stern oder Dreieck verschaltet. Der Motor wird mit einem Stromrichter betrieben. Diese Motoren benötigen eine Ansteuerelektronik, die die Rotorlage ermittelt und die einzelnen Phasen bestromt. Unter anderem werden sensorlose Ansteuerverfahren verwendet, wobei entweder die durch Bewegung in den Phasen induzierte Spannung oder die sich verändernden Ständerinduktivitäten ausgewertet werden. Bei Ersterem liegt der systembedingte Nachteil in der fehlenden Lageinformation bei Stillstand. Bei dem zweiten Verfahren wird die Sättigung der Ständerinduktivität durch das Rotorfeld der Permanentmagnete und das stromverursachte Statorfeld benutzt, um die Rotorlage zu bestimmen.

Induktivitätsbasierte Verfahren und Einrichtungen müssen unter anderem auch die Zweideutigkeit der rotorlageabhängigen Funktionen der Variation der Induktivitäten auflösen. Dies geschieht meist zu Beginn des Motorbetriebes. Während des Motorlaufes wird diese Information üblicherweise gespeichert. Falls die Lageerkennung die Position des Rotors falsch bestimmt oder die gespeicherten Daten verfälscht werden oder sogar verloren gehen, kann es im Extremfall dazu kommen, dass der Rotor in die falsche Richtung dreht.

Andererseits wird die Rotorlage durch eine Bestromung beeinflusst. Dadurch kann der Motor nicht im optimalen Bereich betrieben werden.

Die Einrichtung zeichnet sich vorteilhafterweise dadurch aus, dass die Rotorlage beobachtet/überwacht und gegebenfalls korrigiert wird, in dem die Wirkung der Stromänderungen in den Ständerinduktivitäten auf die Winkelbestimmung analysiert werden und somit die Überlagerung der magnetischen Flüsse ausgewertet werden. Dazu werden die induktivitätsbasierten Signale detektiert.

Die Einrichtung ist dabei im System so platzierbar, dass einzelne Phasenströme gezielt jeweils variierbar sind.

Dabei werden die Stromabhängigkeit der Statorinduktivitäten und die sich daraus ergebene Veränderung der induktivitätsbasierten Signale oder der Rotorlage verwendet. Die Messperioden der Einrichtung werden so gewählt, dass der Motorbetrieb nicht gestört wird. Anders ausgedrückt sollte die Zeit zwischen zwei Messungen deutlich unterhalb der Dynamik des Motors/der Applikation liegen.

Zusätzlich ist vorteilhafterweise geschwindigkeitsabhängig die Zeit optimierbar.

Mittels der Überwachungs-/Kontrolleinrichtung werden die induktivitätsbasierten Signale detektiert und die PWM modifiziert. Damit werden die Ströme in den Phasen gezielt verändert und die Reaktion der induktivitätsbasierten Signale detektiert.

Dazu ist die Erkennungseinrichtung der Rotorlage zur Übertragung der induktivitätsbasierten Signale mit der Überwachungs-/Korrektureinrichtung verbunden, wobei zur Überwachung und Korrektur die induktivitätsbasierten Signale detektiert werden. Weiterhin ist die Erkennungseinrichtung zur Übertragung der Rotorlage mit der Steuereinrichtung zusammengeschaltet. Darüber hinaus ist die Überwachungs-/Korrektureinrichtung mit der Steuereinrichtung so verbunden, dass Ströme in Phasen gezielt verändert werden, wobei aktuelle Schaltzustände der Steuereinrichtung und daraus abgeleitete variierte Schaltzustände der Überwachungs-/Korrektureinrichtung übertragen werden. Die Überwachungs-/Korrektureinrichtung ist weiterhin zur Übertragung von Korrekturwerten mit der Erkennungseinrichtung verbunden, wobei in der Überwachungs-Korrektureinrichtung aus den induktivitätsbasierten Signalen und eigenständig berechneten PWM (Pulsweitenmodulation) eine gezielte Bestromungsänderung in ein PWM-Muster integriert wird.

Die Überwachungs-/Korrektureinrichtung ist in der Lage die PWM eigenständig zu berechnen. Sie detektiert die induktivitätsbasierten Signale. Das System ist in der Lage, gezielt Ströme in Phasen zu manipulieren.

Idealerweise werden die Ströme in den Phasen variiert, denen die Magnetpole des Rotors unmittelbar gegenüberstehen. Durch diese Phasen fließt bei normalem Motorbetrieb kaum Strom. Verändert man in diesen Phasen den Strom, hat man die größte Wirkung auf die jeweilige Induktivität. Das durch den Strom erzeugte Drehmoment ist sehr klein. Man kann diese gezielte Bestromung leicht in ein PWM-Muster integrieren.

Die Reaktion der Induktivitäten wird detektiert und ausgewertet. Die Erkennung der Rotorlage kann durch die Variation der PWM-Muster gestört werden. Deshalb muss die Korrektureinrichtung den Einfluss der Blindströme kompensieren.

Ein Ausführungsbeispiel der Erfindung ist in der Zeichnung prinzipiell dargestellt und wird im Folgenden näher beschrieben.

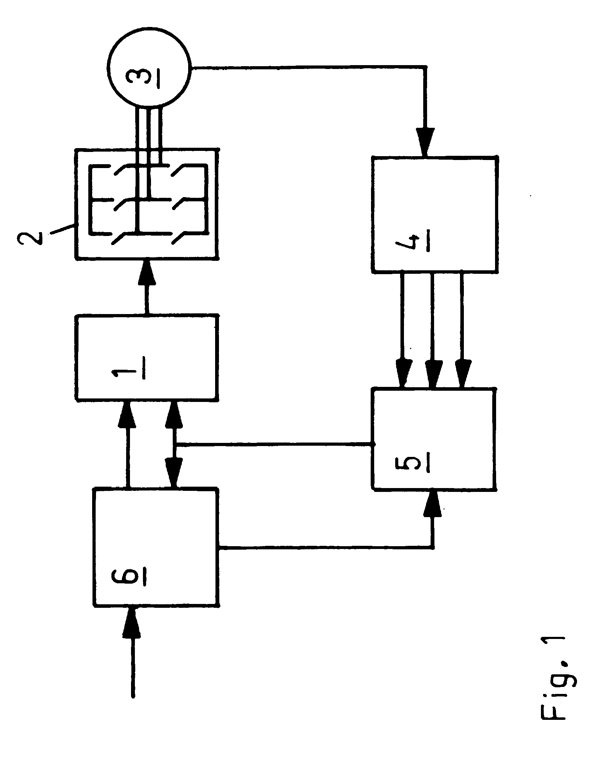

Es zeigt die
Fig. 1 eine Einrichtung zur Überwachung und Korrektur einer sensorlosen Rotorlageerkennung bei permanenterregten Motoren, wobei einzelne Phasenströme jeweils gezielt variierbar sind.

Eine Einrichtung zur Überwachung und Korrektur einer sensorlosen Rotorlageerkennung bei permanenterregten Motoren besteht im Wesentlichen aus einer Erkennungseinrichtung 4, 5 der Rotorlage des betriebenen Motors 3, einer Überwachungs-/Korrektureinrichtung 6 zur Auflösung der Zweideutigkeit der Rotorlageerkennung und bei Erfordernis zur Korrektur der ermittelten Rotorlage, einer Steuereinrichtung 1 und einem Stromrichter 2 mit dem Motor 3.

Bei der Einrichtung zur Überwachung und Korrektur einer sensorlosen Rotorlageerkennung bei permanenterregten Motoren 3 sind die Erkennungseinrichtung 4, 5 der Rotorlage des betriebenen Motors 3 über die Überwachungs-/Korrektureinrichtung 6 zur Auflösung der Zweideutigkeit der Rotorlageerkennung und bei Erfordernis zur Korrektur der Rotorlage, der Steuereinrichtung 1 und dem Stromrichter 2 mit dem Motor 3 zusammengeschaltet, wobei die Ströme im Motor 3 variiert werden und damit die Stromabhängigkeit der Statorinduktivitäten zur Korrektur verwendet wird.

Dabei wird zur Überwachung und Korrektur einer sensorlosen Rotorlageerkennung bei permanenterregten Motoren 3 während des Betriebes des Motors die Rotorlage mittels der Erkennungseinrichtung 4, 5 detektiert und über die Überwachungs-/Korrektureinrichtung 6 die Zweideutigkeit der Rotorlageerkennung aufgelöst und bei Erfordernis korrigiert, wobei die Ströme im Motor variiert werden.

Dabei werden während des Betriebes des Motors 3 die Rotorlage mittels einer Messung der Induktivitäten oder den Relationen zwischen den Induktivitäten ermittelt, wobei der Motor 3 mit einer Einrichtung 4 zur Induktivitätsbestimmung als Bestandteil der Erkennungseinrichtung 4, 5 zusammengeschaltet ist. Aus den induktivitätsbasierten Signalen dieser Einrichtung 4 wird in einer Einrichtung 5 zur Rotorlageerkennung die Rotorlage erkannt. Diese Einrichtung 5 ist gleichfalls ein Bestandteil der Erkennungseinrichtung 4, 5.

Die Einrichtung ist dabei im System so platzierbar, dass einzelne Phasenströme jeweils gezielt variierbar sind.

Bei einer Einrichtung mit einer gezielten Variation einzelner Phasenströme ist die Erkennungseinrichtung 4, 5 der Rotorlage zur Übertragung der induktivitätsbasierten Signale mit der Überwachungs-/Korrektureinrichtung 6 verbunden, wobei zur Überwachung und Korrektur die induktivitätsbasierten Signale detektiert werden. Die Erkennungseinrichtung 4, 5 ist zur Übertragung der Rotorlage mit der Steuereinrichtung 1 zusammengeschaltet. Die Überwachungs-/Korrektureinrichtung 6 ist mit der Steuereinrichtung so verbunden, dass Ströme in Phasen gezielt verändert werden, wobei aktuelle Schaltzustände der Steuereinrichtung 1 und variierte Schaltzustände der Überwachungs-/Korrektureinrichtung 6 übertragen werden. Die Überwachungs-/Korrektureinrichtung 6 ist zur Übertragung von Korrekturwerten mit der Erkennungseinrichtung 4, 5 verbunden, wobei in der Überwachungs-Korrektureinrichtung 6 aus den induktivitätsbasierten Signalen und eigenständig berechneten PWM eine gezielte Bestromung in ein PWM-Muster integriert wird.

Die Fig. 1 zeigt eine Einrichtung zur Überwachung und Korrektur einer sensorlosen Rotorlageerkennung bei permanenterregten Motoren 3 in einer prinzipiellen Darstellung mit einem Stromrichter 2, wobei einzelne Phasenströme jeweils gezielt variierbar sind.

Mittels der Überwachungs-/Kontrolleinrichtung 6 werden die induktivitätsbasierten Signale detektiert und die PWM modifiziert. Dadurch werden die Ströme in den Phasen gezielt verändert und die Reaktion der induktivitätsbasierten Signale detektiert.

Bei dieser Ausführungsvariante werden dabei gezielt Ströme in den Phasen variiert, denen die Magnetpole des Rotors direkt gegenüberstehen.

Die Fig. 2 zeigt eine Einrichtung zur Überwachung und Korrektur einer sensorlosen Rotorlageerkennung bei permanenterregten Motoren, wobei der Phasenwinkel der Bestromung variiert wird.

Fig. 3 zeigt eine Einrichtung zur Überwachung und Korrektur einer sensorlosen Rotorlageerkennung bei permanenterregten Motoren, wobei einzelne Phasenströme jeweils gezielt variierbar sind.

In den nachfolgenden Ausführungsbeispielen werden Verfahren und Einrichtungen zur Überwachung und Korrektur einer sensorlosen Rotorlageerkennung bei permanenterregten Motoren jeweils zusammen näher erläutert.

Eine Einrichtung zur Überwachung und Korrektur einer sensorlosen Rotorlageerkennung bei permanenterregten Motoren besteht im Wesentlichen aus einer Erkennungseinrichtung 4, 5 der Rotorlage des betriebenen Motors 3, einer Überwachungs-/Korrektureinrichtung 6 zur Auflösung der Zweideutigkeit der Rotorlageerkennung und bei Erfordernis zur Korrektur der ermittelten Rotorlage, einer Steuereinrichtung 1 und einem Stromrichter 2 mit dem Motor 3.

Bei der Einrichtung zur Überwachung und Korrektur einer sensorlosen Rotorlageerkennung bei permanenterregten Motoren 3 sind die Erkennungseinrichtung 4, 5 der Rotorlage des betriebenen Motors 3 über die Überwachungs-/Korrektureinrichtung 6 zur Auflösung der Zweideutigkeit der Rotorlageerkennung und bei Erfordernis zur Korrektur der Rotorlage, der Steuereinrichtung 1 und dem Stromrichter 2 mit dem Motor 3 zusammengeschaltet, wobei die Ströme im Motor 3 variiert werden und damit die Stromabhängigkeit der Statorinduktivitäten zur Korrektur verwendet wird.

Dabei wird zur Überwachung und Korrektur einer sensorlosen Rotorlageerkennung bei permanenterregten Motoren 3 während des Betriebes des Motors die Rotorlage mittels der Erkennungseinrichtung 4, 5 detektiert und über die Überwachungs-/Korrektureinrichtung 6 die Zweideutigkeit der Rotorlageerkennung aufgelöst und bei Erfordernis korrigiert, wobei die Ströme im Motor variiert werden.

Dabei wird während des Betriebes des Motors 3 die Rotorlage mittels einer Messung der Induktivitäten oder den Relationen zwischen den Induktivitäten ermittelt, wobei der Motor 3 mit einer Einrichtung 4 zur Induktivitätsbestimmung als Bestandteil der Erkennungseinrichtung 4, 5 zusammengeschaltet ist. Aus den induktivitätsbasierten Signalen dieser Einrichtung 4 wird in einer Einrichtung 5 zur Rotorlageerkennung die Rotorlage erkannt. Diese Einrichtung 5 ist gleichfalls ein Bestandteil der Erkennungseinrichtung 4, 5.

Die Einrichtung ist dabei im System so platzierbar, dass
- in einer ersten Ausführungsform die Motorspannung,
- in einer zweiten Ausführungsform der Phasenwinkel der Bestromung oder
- in einer dritten Ausführungsform einzelne Phasenströme jeweils gezielt variierbar sind.

Bei der Einrichtung der ersten Ausführungsform mit einer Variation der Motorspannung ist die Erkennungseinrichtung 4, 5 der Rotorlage zur Übertragung der Rotorlage mit der Überwachungs-/Korrektureinrichtung 6 und der Steuereinrichtung 1 verbunden, wobei mittels der Überwachungs-/Korrektureinrichtung 6 die Motorspannung vergrößert und verkleinert wird, so dass sich im Mittel die vorgegebene Motorspannung ergibt. Die Überwachungs-/Korrektureinrichtung 6 ist zur Übertragung der korrigierten Rotorlage mit der Erkennungseinrichtung 4, 5 so zusammengeschaltet, dass die Überwachungs-/Korrektureinrichtung 6 die Reaktion der Erkennungseinrichtung 4, 5 der Rotorlage detektiert.

Die Fig. 1 zeigt eine Einrichtung zur Überwachung und Korrektur einer sensorlosen Rotorlageerkennung bei permanenterregten Motoren 3 in einer prinzipiellen Darstellung mit einem Stromrichter 2, wobei die Motorspannung variiert wird.

Zur Überwachung und Korrektur wird dabei mittels der Überwachungs-/Korrektureinrichtung 6 die Motorspannung vergrößert und verkleinert, so dass sich im Mittel die vorgegebene Motorspannung ergibt. Weiterhin wird mit der Überwachungs-/Korrektureinrichtung 6 die Reaktion der Erkennungseinrichtung 4, 5 der Rotorlage detektiert.

Bei einer Einrichtung der zweiten Ausführungsform mit einer Variation des Phasenwinkels der Bestromung ist die Erkennungseinrichtung 4, 5 der Rotorlage zur Übertragung der induktivitätsbasierten Signale und der Rotorlage mit der Überwachungs-/Korrektureinrichtung 6 verbunden, wobei zur Überwachung und Korrektur mittels der Überwachungs-/Korrektureinrichtung 6 die Phasenlage und daraus folgernd die Rotorlage verschoben wird. Weiterhin ist die Überwachungs-/Korrektureinrichtung 6 zur Übertragung der korrigierten Rotorlage mit der Erkennungseinrichtung 4, 5 zusammengeschaltet. Die Überwachungs-/Korrektureinrichtung 6 ist darüber hinaus zur Übertragung der variierten Rotorlage mit der Steuereinrichtung 1 verbunden, wobei die Amplituden der induktivitätsbasierten Signale detektiert werden.

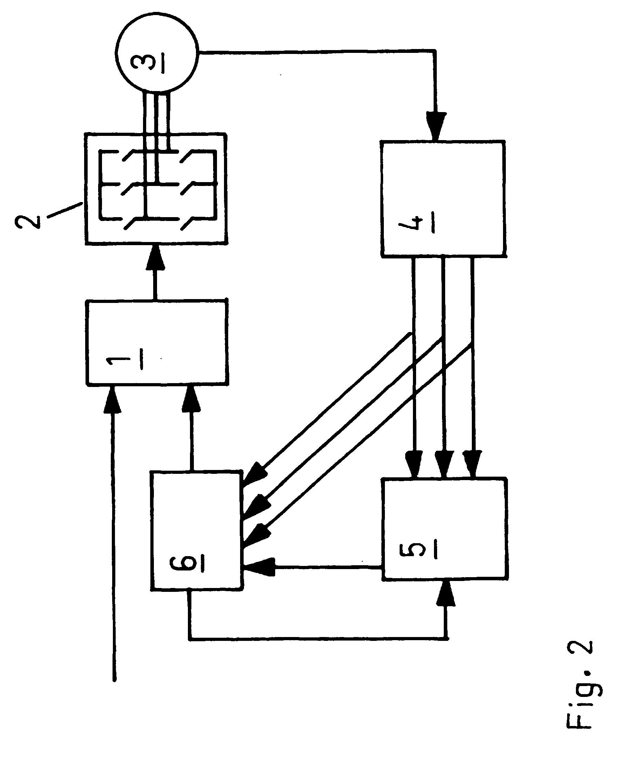

Die Fig. 2 zeigt eine Einrichtung zur Überwachung und Korrektur einer sensorlosen Rotorlageerkennung bei permanenterregten Motoren 3 in einer prinzipiellen Darstellung mit einem Stromrichter 2, wobei der Phasenwinkel der Bestromung variiert wird.

Zur Überwachung und Korrektur mittels der Überwachungs-/Korrektureinrichtung 6 werden dabei die Phasenlage der Bestromung und daraus folgernd die Rotorlage verschoben und die Amplituden der induktivitätsbasierten Signale detektiert.

Bei einer Einrichtung der dritten Ausführungsform mit einer gezielten Variation einzelner Phasenströme ist die Erkennungseinrichtung 4, 5 der Rotorlage zur Übertragung der induktivitätsbasierten Signale mit der Überwachungs-/Korrektureinrichtung 6 verbunden, wobei zur Überwachung und Korrektur die induktivitätsbasierten Signale detektiert werden. Die Erkennungseinrichtung 4, 5 ist zur Übertragung der Rotorlage mit der Steuereinrichtung 1 zusammengeschaltet. Die Überwachungs-/Korrektureinrichtung 6 ist mit der Steuereinrichtung so verbunden, dass Ströme in Phasen gezielt verändert werden, wobei aktuelle Schaltzustände der Steuereinrichtung 1 und variierte Schaltzustände der Überwachungs-/Korrektureinrichtung 6 übertragen werden. Die Überwachungs-/Korrektureinrichtung 6 ist zur Übertragung von Korrekturwerten mit der Erkennungseinrichtung 4, 5 verbunden, wobei in der Überwachungs-Korrektureinrichtung 6 aus den induktivitätsbasierten Signalen und eigenständig berechneten PWM eine gezielte Bestromung in ein PWM-Muster integriert wird.

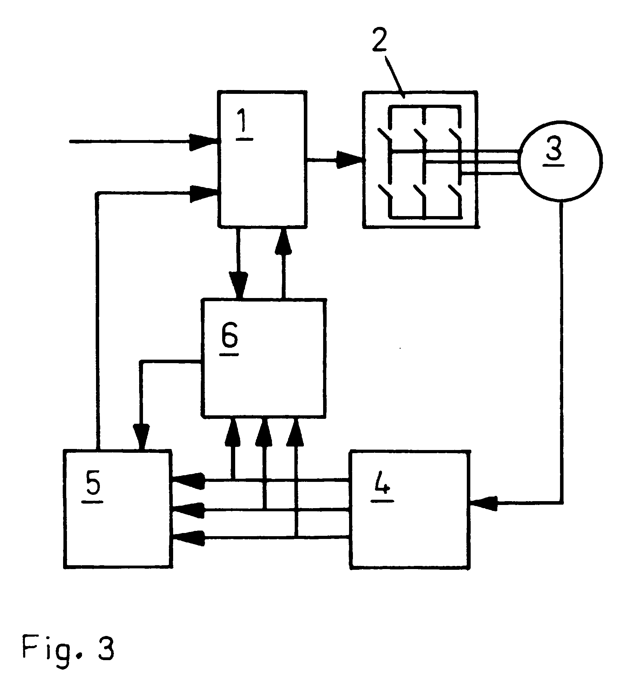

Die Fig. 3 zeigt eine Einrichtung zur Überwachung und Korrektur einer sensorlosen Rotorlageerkennung bei permanenterregten Motoren 3 in einer prinzipiellen Darstellung mit einem Stromrichter 2, wobei einzelne Phasenströme jeweils gezielt variierbar sind.

Mittels der Überwachungs-/Kontrolleinrichtung 6 werden die induktivitätsbasierten Signale detektiert und die PWM modifiziert. Dadurch werden die Ströme in den Phasen gezielt verändert und die Reaktion der induktivitätsbasierten Signale detektiert.

Bei dieser Ausführungsvariante werden dabei gezielt Ströme in den Phasen variiert, denen die Magnetpole des Rotors direkt gegenüberstehen.

## Patentansprüche

1. Einrichtung zur sensorlosen Überwachung und Korrektur der Rotorlage eines bürstenlosen Gleichstrommotors (BLDC) (3), wobei eine Erkennungseinrichtung (4, 5) der Rotorlage des betriebenen Motors (3) zur Übertragung der detektierten induktivitätsbasierten Signale über eine Überwachungs-/Korrektureinrichtung (6) zur Überwachung der Zweideutigkeit der Rotorlageerkennung und bei Erfordernis zur Korrektur der Rotorlage, eine Steuereinrichtung (1) und ein Stromrichter (2) mit dem Motor (3) und die Erkennungseinrichtung (4, 5) zur Übertragung der Rotorlage mit der Steuereinrichtung (1) zusammengeschaltet sind, **dadurch gekennzeichnet,**
- **dass** die Überwachungs-/Korrektureinrichtung (6) zur gezielten Veränderung von Strömen in Phasen, bei denen die Magnetpole des Rotors unmittelbar gegenüberstehen, mit der Steuereinrichtung (1) verbunden ist, wobei aktuelle Schaltzustände der Steuereinrichtung (1) und daraus abgeleitete variierte Schaltzustände der Überwachungs-/Korrektureinrichtung (6) übertragen werden, und
- **dass** die Überwachungs-/Korrektureinrichtung (6) weiterhin zur Übertragung von Korrekturwerten mit der Erkennungseinrichtung (4, 5) verbunden ist, so dass in der Überwachungs-/Korrektureinrichtung (6) aus den detektierten induktivitätsbasierten Signalen, wobei die Zeit zwischen zwei Messungen deutlich unterhalb der Dynamik des Motors (3) liegt, und einer eigenständig berechneten PWM (Pulsweitenmodulation) eine gezielte Bestromungsänderung mit Kompensation des Einflusses der Blindströme in ein PWM-Muster integriert ist.

2. Einrichtung nach Patentanspruch 1, **dadurch gekennzeichnet, dass** die Erkennungseinrichtung (4, 5) der Rotorlage zur Übertragung der Rotorlage mit der Überwachungs-/Korrektureinrichtung (6) und der Steuereinrichtung (1) verbunden ist, wobei mittels der Überwachungs-/Korrektureinrichtung (6) die Motorspannung vergrößert und verkleinert wird, so dass sich im Mittel die vorgegebene Motorspannung ergibt, und dass die Überwachungs-/Korrektureinrichtung (6) zur Übertragung der korrigierten Rotorlage mit der Erkennungseinrichtung (4, 5) zusammengeschaltet ist, so dass die Überwachungs-/Korrektureinrichtung (6) die Reaktion der Erkennungseinrichtung (4, 5) der Rotorlage detektiert und auswertet.

3. Einrichtung nach Patentanspruch 1, **dadurch gekennzeichnet, dass** die Erkennungseinrichtung (4, 5) der Rotorlage aus einer Einrichtung (4) zur Induktivitätsbestimmung und einer aus den induktivtätsbasierten Signalen die Rotorlage bestimmenden Einrichtung (5) besteht, dass die Erkennungseinrichtung (4, 5) der Rotorlage zur Übertragung der induktivitätsbasierten Signale und der Rotorlage mit der Überwachungs-/Korrektureinrichtung (6) verbunden ist, wobei zur Überwachung und Korrektur mittels der Überwachungs-/Korrektureinrichtung (6) die Phasenlage der Bestromung verschoben wird, dass die Überwachungs-/Korrektureinrichtung (6) zur Übertragung der korrigierten Rotorlage mit der Erkennungseinrichtung (4, 5) zusammengeschaltet ist, und dass die Überwachungs-/Korrektureinrichtung (6) zur Übertragung der variierten Rotorlage mit der Steuereinrichtung (1) verbunden ist, so dass die Amplituden der induktivitätsbasierten Signale detektiert werden.

## Claims

1. A device for sensorless monitoring and correction of the rotor position of a brushless DC motor (BLDC) (3), whereby a detection device (4, 5) for detecting the rotor position of the motor in operation (3) for the transmission of the detected, inductance-based signals via a monitoring/correction device (6) for monitoring the ambiguity of the rotor position detection, and if necessary for correcting the rotor position, a control device (1) and a converter (2) are interconnected with the motor (3); and the detection device (4, 5) for transmitting the rotor position is interconnected with the control device (1), being **characterized in that**
• the monitoring/correction device (6) is connected to the control device (1) to allow for purposeful modification of currents in those phases in which the magnetic poles of the rotor are directly opposite one another, whereby current switch states of the control device (1) and therefrom derived varying switch states of the monitoring/correction device (6) are transmitted, and
• the monitoring/correction device (6) is further connected to the detection device (4, 5) for the transmission of correction values, so that in the monitoring/correction device (6) a purposeful modification of currents, including compensation of the influence of reactive currents into a PWM (pulse width modulation) pattern is integrated, which arises from the detected inductance-based signals, with the time between any two measurements being markedly below the dynamics of the motor (3), and an independently calculated PWM.

2. Device according to patent claim 1, **characterized in that**, the detection device (4, 5) for detecting the rotor position is connected to the monitoring/correction device (6) and the control device (1) for transmitting the rotor position, whereby by using the monitoring/correction device (6) the motor voltage is increased or reduced, resulting on average in the set motor voltage, and, the monitoring/correction device (6) is interconnected with the detection device (4,5) for transmission of the corrected rotor position, so that the monitoring/correction device (6) detects and evaluates the reaction of the detection device (4,5) for the rotor position.

3. Device according to patent claim 1, **characterized in that** the detection device (4, 5) for the rotor position consists of a device (4) for inductance measurement and a device (5) determining the rotor position from the inductance-based signals, that the detection device (4, 5) for detecting the rotor position is connected to the monitoring/correction device (6) for transmitting the inductance-based signals and rotor position, whereby for monitoring and correcting by means of the monitoring/correction device (6), the phasing of the current feed is shifted, that the monitoring/correction device (6) for transmitting the corrected rotor position is interconnected with the detection device (4, 5), and that the monitoring/correction device (6) is connected with the control device (1) for transmitting the varied rotor position, so that the amplitudes of the inductance-based signals are detected.

## Revendications

1. Dispositif de surveillance et de correction sans capteur de la position de rotor d'un moteur à courant continu sans balais (BLDC) (3), dans lequel un dispositif de détection (4, 5) de la position de rotor du moteur (3) en fonctionnement, pour la transmission des signaux basés sur l'inductance détectés via un dispositif de surveillance et de correction (6) pour surveiller l'ambiguïté de la détection de position de rotor et, en cas de besoin, corriger la position de rotor, un dispositif de commande (1) et un convertisseur (2) sont interconnectés avec le moteur (3) et le dispositif de détection (4, 5), pour la transmission de la position de rotor, interconnecté avec le dispositif de commande (1), **caractérisé en ce**
- **que** le dispositif de surveillance et de correction (6) est relié au dispositif de commande (1) pour faire varier de manière sélective les courants dans les phases dans lesquelles les pôles magnétiques du rotor sont directement en face l'un de l'autre, les états de commutation actuels du dispositif de commande (1) et des états de commutation variés dérivés de ceux-ci étant transmis au dispositif de surveillance et de correction (6), et
- **que** le dispositif de surveillance et de correction (6) est en outre relié au dispositif de détection (4, 5) pour la transmission de valeurs de correction, de sorte qu'à partir des signaux basés sur l'inductance détectés, le temps entre deux mesures étant nettement inférieur à la dynamique du moteur (3), et d'une PWM (modulation d'impulsions en largeur) calculée de manière indépendante, une variation sélective d'alimentation en courant avec compensation des courants réactifs est intégrée en un schéma de PWM dans le dispositif de surveillance et de correction (6).

2. Dispositif selon la revendication 1, **caractérisé en ce que**, pour la transmission de la position de rotor, le dispositif de détection (4, 5) de la position de rotor est relié au dispositif de surveillance et de correction (6) et au dispositif de commande (1), la tension de moteur étant augmentée et diminuée au moyen du dispositif de surveillance et de correction (6), de sorte qu'il en résulte en moyenne la tension de moteur prescrite, et **en ce que**, pour la transmission de la position de rotor corrigée, le dispositif de surveillance et de correction (6) est interconnecté avec le dispositif de détection (4, 5), de sorte que le dispositif de surveillance et de correction (6) détecte et évalue la réaction du dispositif de détection (4, 5).

3. Dispositif selon la revendication 1, **caractérisé en ce que** le dispositif de détection (4, 5) de la position de rotor est composé d'un dispositif (4) de détermination de l'inductance et d'un dispositif (5) déterminant la position de rotor à partir des signaux basés sur l'inductance, **en ce que**, pour la transmission des signaux basés sur l'inductance et de la position de rotor, le dispositif de détection (4, 5) de la position de rotor est relié au dispositif de surveillance et de correction (6), la position de phase de l'alimentation en courant étant décalée pour permettre la surveillance et la correction au moyen du dispositif de surveillance et de correction (6), **en ce que**, pour la transmission de la position de rotor corrigée, le dispositif de surveillance et de correction (6) est interconnecté avec le dispositif de détection (4, 5) et **en ce que**, pour la transmission de la position de rotor variée, le dispositif de surveillance et de correction (6) est relié au dispositif de commande (1), de sorte que les amplitudes des signaux basés sur l'inductance sont détectés.
